# EUROPÄISCHE PATENTSCHRIFT

(11) **EP 3 184 872 B1**
(45) Veröffentlichungstag und Bekanntmachung des Hinweises auf die Patenterteilung: **06.02.2019**
(21) Anmeldenummer: 16203500.0
(22) Anmeldetag: 12.12.2016
(51) Int. Cl.: F16L 41/06, F16L 47/03, F16L 47/34, B23B 51/04

(54) **ANBOHRARMATUR UND EIN ENTSPRECHENDES HERSTELLUNGSVERFAHREN**
DRILL FITTING AND CORRESPONDING PRODUCTION METHOD
ACCESSOIRE DE FORAGE ET SON PROCÉDÉ DE PRODUCTION ASSOCIÉ

(30) Priorität: 23.12.2015 DE 102015122731
(43) Veröffentlichungstag der Anmeldung: 28.06.2017
(73) Patentinhaber: Friatec GmbH, 68229 Mannheim (DE)
(72) Erfinder: Ehrhardt, Peter, 68549 Ilvesheim (DE); Kehl, Torsten, 64683 Einhausen (DE); Wilhelm, Markus, 69488 Birkenau (DE)
(74) Vertreter: Angerhausen, Christoph

(56) Entgegenhaltungen:
- EP-A1- 0 736 718
- WO-A1-99/57479
- DE-A1- 10 310 171
- DE-U- 7 321 646

## Beschreibung

Die Erfindung geht aus von einer Anbohrarmatur für die Montage auf einem Kunststoffrohr, wobei die Anbohrarmatur ein Sattelelement, ein eine äußere Hülse einer Anbohrkartusche umschließendes Kartuschengehäuse und einen von dem Kartuschengehäuse abgehenden Anschlussstutzen aufweist, wobei das Sattelelement, das Kartuschengehäuse und der Anschlussstutzen aus demselben elektroschweißfähigen Kunststoffmaterial als ein einteiliges Kunststoffformteil ausgebildet sind, wobei das Kartuschengehäuse und die Anbohrkartusche einteilig ausgebildet sind, wozu das Kartuschengehäuse eine Umspritzung der Anbohrkartusche aus dem Kunststoffmaterial ist, mit einer Seitenwand, die eine äußere Mantelfläche der Hülse vorzugsweise formschlüssig umschließt, einer einteilig an die Seitenwand angeformten Deckseite, die eine obere Stirnseite der Hülse, über die eine Antriebsspindel der Anbohrkartusche aus dem Kartuschengehäuse herausragt, vorzugsweise formschlüssig umschließt, und mit einer einteilig an die Seitenwand angeformten Bodenseite, die eine untere Stirnseite der Hülse, über die ein Bohrkopf aus der Hülse heraus verlagert werden kann, vorzugsweise formschlüssig umschließt. Eine derartige Anbohrarmatur ist aus der WO 99/57479 A1bekannt. Ähnliche Armaturen offenbaren auch die EP 1 069 367 B1, die DE 42 39 573 C2, die DE 10 2014 224 088 A1, die DE 103 20 997 B4, die DE 103 10 171 B4, die EP 0 736 718 A1, die DE 73 216 46 U und die EP 1 069 365 B1.

Die aus dem Stand der Technik bekannten Anbohrarmaturen haben häufig den Nachteil, dass sie aufwendig in der Herstellung sind, was daran zum Beispiel daran liegt, dass das Kartuschengehäuse mehrteilig ausgebildet ist, mit einem Mantelgehäuse, welches einerseits an das Sattelelement und andererseits an den Anschlussstutzen angeformt ist, und welches für die Abdichtung der Antriebskartusche nach außen mit einem zusätzlichen, geschraubten oder aufgeschweißten Deckel unter Verwendung von Dichtelementen fluidisch dicht verschlossen werden muss. Eine derartige Anbohrarmatur wird in der DE 10 2014 224 088 A1 beschrieben. Bei der aus der EP 1 069 365 B1 bekannten Armatur ist in einem gesonderten Arbeitsschritt eine äußere Kartuschenhülse in ein separat hergestelltes Kunststoffgehäuse einzuschieben und in einer Einschubposition zu verankern, was die Armatur konstruktiv aufwendig macht.

Es ist daher die Aufgabe der Erfindung, eine gattungsgemäße Anbohrarmatur derart weiterzuentwickeln, dass sie einfach und damit kostengünstig in der Herstellung ist.

Diese Aufgabe wird durch eine Anbohrarmatur mit den Merkmalen des Anspruchs 1 gelöst. Der nebengeordnete Anspruch 10 beschreibt ein entsprechendes Herstellungsverfahren. Die abhängigen Ansprüche betreffen jeweils vorteilhafte Ausführungsformen der Erfindung. Demgemäß ist vorgesehen, dass das einteilige Kunststoffformteil aus Sattelelement, Kartuschengehäuse und Anschlussstutzen, das insbesondere ein Spritzgussformteil sein kann, alle außen liegenden Seiten der Hülse vollständig und einteilig umgibt bzw. bedeckt, insbesondere zumindest die Mantelfläche, die obere Stirnseite und die untere Stirnseite der Hülse, über die ein Bohrkopf aus der Hülse heraus verlagert werden kann, um ein Rohr, auf dem die Armatur montiert ist, anzubohren.

Dies kann es ermöglichen, dass die Anbohrkartusche als ein fertig vormontiertes Bauteil bereitgestellt wird, welches, beispielsweise in einem Spritzgussverfahren für Kunststoffmaterialien, mit dem einteiligen Kunststoffformteil in einem einzigen Arbeitsschritt umgossen wird, bei dem gleichzeitig sämtliche Kunststoffanteile der Anbohrarmatur ausgebildet werden können und andererseits die Kartusche in dem Kunststoffformteil eingefasst wird, so dass unmittelbar mit der Ausbildung des Kunststoffformteils bereits die vollständig funktionsfähige Anbohrarmatur erhalten wird, ohne dass aufwendige Nachbearbeitungsschritte erforderlich sind, beispielsweise die Montage einer Abdeckkappe, um die Anbohrkartusche nach außen abzudichten, oder das nachträgliche Einschieben einer Kartusche in das Kunststoffformteil. Eine Umspritzung der Antriebsspindel im Kartuschengehäuse kann zusätzlich weitestgehend das das Verschmutzen eines Dichtungspakets, mit dem die Spindel gegenüber der Hülse abgedichtet ist, verhindern.

Es kann vorgesehen sein, dass das Kartuschengehäuse in der Deckseite einen Durchlass aufweist, über den die Antriebsspindel aus dem Kartuschengehäuse herausragt, wobei der Durchlass einen Durchmesser aufweist, der im Wesentlichen einem Innendurchmesser der Hülse an der oberen Stirnseite entspricht. Dementsprechend kann der Durchmesser des Durchlasses auch dem Außendurchmesser der Antriebsspindel entsprechen.

Die Hülse kann an ihrem Außenumfang eine im Querschnitt senkrecht zur Längsrichtung eine unrunde, insbesondere kantige Kontur aufweisen, die von dem Kunststoffformteil formschlüssig eingefasst ist, um so die Hülse gegenüber einer Verdrehung um ihre Längsachse gegenüber dem Kunststoffformteil festzulegen.

Die einteilige Ausbildung des Kunststoffformteils ermöglicht weiterhin eine kompakte Bauform der Anbohrarmatur. Insbesondere kann das Sattelelement in Radialrichtung eine Wandstärke aufweisen, wobei sich die Hülse mit ihrer unteren Stirnseite zu mehr als 50% und vorzugsweise zu mehr als 75% der Wandstärke in der Radialrichtung des Sattelelements in das Sattelelement hinein erstreckt. Dabei kann die verbleibende Wandstärke zwischen unterer Stirnseite und einer Auflageseite des Sattelelements die Bodenseite bilden, so dass die Bodenseite als ein umlaufender Ringflansch ausgebildet ist.

Dabei kann die Hülse an ihrem sich in das Sattelelement hineinragenden Ende an ihrem Innenumfang der unteren Stirnseite vorgelagert einen Anschlag für einen in Längsrichtung der Hülse verstellbaren Bohrkopf aufweisen. Die Hülse kann weiterhin an ihrem Innenumfang in Längsrichtung zwischen dem Anschlag und der unteren Stirnseite einen von dem Kunststoffmaterial des einteiligen Kunststoffformteils gefüllten, insbesondere umspritzten Hinterschnitt aufweisen. Dies trägt weiter dazu bei, dass bei der Herstellung der Armatur zuverlässig sämtliche außenliegenden Flächen der Hülse von dem Kunststoffmaterial umgeben werden, wobei gleichzeitig jedoch eine kompakte Bauform der Anbohrarmatur gewährleistet bleibt.

Um die Anbohrarmatur unempfindlich gegenüber Verschmutzungen wie Inkrustationen, Schwebstoffen und mineralischen Inhaltsstoffen im Trinkwasser zu machen, kann der Bohrkopf an seinem Außenumfang ein Leichtlaufgewinde, insbesondere ein Rundgewinde aufweisen, über das der Bohrkopf in ein komplementäres Gewinde am Innenumfang der Hülse eingreift und so durch Verdrehen gegenüber der Hülse linearverstellbar ist. Weiterhin kann die Antriebsspindel als Hohlspindel ausgeführt sein, in der eine Bohrspindel in Axialrichtung der Antriebsspindel verstellbar und in Drehrichtung mit der Hohlspindel drehgekoppelt ist, wobei die Bohrspindel wiederum mit einem Bohrkopf drehgekoppelt ist. Rundgewinde haben den Vorteil, dass sie reibungsarm sind und ein geringes Bewegungs- und Anbohrdrehmoment ermöglichen. Des Weiteren kann die Steigung des Rundgewindes vergleichsweise groß gewählt werden, so dass sich die Anzahl der Umdrehungen, die erforderlich ist, um den Bohrkopf in eine vollständig ausgefahrene Stellung zu bringen, reduziert.

Um die Betriebssicherheit der Anbohrarmatur noch weiter zu erhöhen, kann vorgesehen sein, dass die Bohrspindel zwischen einer ersten Kupplung, über die der Bohrkopf mit der Bohrspindel drehgekoppelt ist, und einer zweiten Kupplung, über die die Bohrspindel mit der Antriebsspindel drehgekoppelt ist, eine Abreißstelle aufweist, welche die Drehkopplung zwischen dem Bohrkopf und der Antriebsspindel unterbricht, wenn das über die Antriebsspindel auf den Bohrkopf ausgeübte Drehmoment einen vorgegebenen Maximalwert übersteigt. Dies verhindert insbesondere, dass die Anbohrarmatur bei übermäßiger Belastung durch ein zu hohes auf die Antriebsspindel eingewirktes Drehmoment verwindet und dadurch undicht wird.

Die Abreißstelle kann insbesondere eine Materialverjüngung der Bohrspindel aufweisen und ist vorzugsweise als mindestens eine umlaufende oder unterbrochene Nut im Außenumfang der Bohrspindel ausgebildet.

Insbesondere zur Einhaltung von Hygienevorschriften und zur Vermeidung von Stagnationswasser bei diskontinuierlichem Betrieb kann die Bohrspindel mindestens eine sich entlang Ihrer Längsrichtung erstreckende Spülnut aufweisen, über die in einem teil- oder im vollausgefahrenen Stellzustand der Bohrspindel ein Aufnahmeraum der Antriebsspindel, in den die Bohrspindel formschlüssig eingesetzt ist, mit dem Anschlussstutzen fluidisch in Verbindung steht und so von dem durch die Anbohrarmatur geleiteten Fluid umspült wird.

Das erforderliche Anbohrdrehmoment kann dadurch verringert werden, dass der Bohrkopf eine Hülse mit einer als Schneidkante ausgebildeten Stirnseite mit einem Wellenprofil aufweist, das sich entlang der Schneidkante erstreckt und eine Periodizität von 1 mm bis 20 mm, vorzugsweise von 2 mm bis 10 mm und besonders bevorzugt von 3 mm bis 6 mm aufweist, wobei eine Amplitude der Schneidkante in einer Vorschubrichtung des Bohrkopfs 0,2 mm bis 1 mm und bevorzugt 0,3 mm bis 0,8 mm beträgt. Da der Bohrkopf sowohl eine translatorische als auch eine rotatorische Bewegung beim Schneidvorgang ausführt und die Schnittfolge bei manueller Betätigung diskontinuierlich erfolgt, dürfen beim Durchdringen der PE-Rohrwand keine Polyethylenspäne entstehen. Diese Späne könnten in die Rohrleitung fallen und vom Medienstrom mitgerissen und zur Fehlfunktion von Ventilen führen. Deshalb muss die Materialverdrängung ohne Spannbildung erfolgen und das Wellenprofil entlang der Schneidkante eine partielle Materialverdrängung mit Freischnitt (Freiwinkel) zur Reduktion des Anbohrmomentes führen, was gerade mit der zuvor genannten Geometrie erreicht wird.

Gemäß einem anderen Aspekt betrifft die Erfindung ein Herstellungsverfahren für eine Anbohrarmatur, das die Schritte aufweist:
- Einsetzen einer Anbohrkartusche in eine Spritzgussform einer Spritzgussmaschine, Ausrichten der Anbohrkartusche in Bezug auf die Spritzgussform und Schließen der Spritzgussform, wobei die Spritzgussform für die einteilige Ausbildung eines Kunststoffformteils aus einem Sattelelement, einem Kartuschengehäuse und einem von dem Kartuschengehäuse abgehenden Anschlussstutzen eingerichtet ist;
- Einleiten vorplastifizierten und elektroschweißfähigen Kunststoffmaterials in die Spritzgussform und Umspritzen der Anbohrkartusche zur Ausbildung des Kartuschengehäuses;
dadurch gekennzeichnet, dass bei dem Umspritzen der Anbohrkartusche eine äußere Mantelfläche einer äußeren Hülse der Anbohrkartusche zur Ausbildung einer Seitenwand des Kartuschengehäuses, eine obere Stirnseite der Hülse (3) zur Ausbildung einer einteilig an die Seitenwand (7) angeformten Deckseite (26) und eine untere Stirnseite (12) der Hülse (3) zur Ausbildung einer einteilig an die Seitenwand (7) angeformten Bodenseite (38) vollständig umspritzt werden.

Das erfindungsgemäße Herstellungsverfahren ermöglicht es insbesondere, dass die Anbohrkartusche als bereits vollständig montiertes Bauteil in die Spritzgussform eingesetzt und umspritzt wird, so dass nach der Umspritzung der Anbohrkartusche keine weiteren Montagearbeiten, etwa durch das Einsetzen und Festziehen der Antriebsspindel, wie es aus der DE 10210844 B4 bekannt ist, erforderlich sind.

Das Umspritzen der Anbohrkartusche kann insbesondere derart ausgestaltet sein, dass alle außenliegenden Seiten der Hülse, insbesondere deren Mantelfläche sowie deren obere und untere Stirnseite, einteilig umspritzt werden, wobei ein erster Durchlass, über den eine Antriebsspindel aus dem Kartuschengehäuse herausragt, und ein zweiter Durchlass, über den ein Bohrkopf zum Anbohren eines Rohres aus der Hülse heraus verlagert werden kann, ausgebildet werden.

Weitere Einzelheiten der Erfindung werden anhand der nachstehenden Figuren erläutert. Dabei zeigt:
- Figur 1: die Querschnittsansicht einer Ausführungsform der erfindungsgemäßen Anbohrarmatur;
- Figur 2: eine vergrößerte Querschnittsansicht der Anbohrkartusche gemäß Figur 1;
- Figur 3: die Seitenansicht einer Antriebsspindel gemäß einer Ausführungsform;
- Figur 4: die Seitenansicht einer äußeren Hülse gemäß einer Ausführungsform;
- Figur 5: eine Anbohreinheit aus Bohrkopf und Bohrspindel; und
- Figur 6: eine Detailansicht der Bohrspindel gemäß Figur 5.

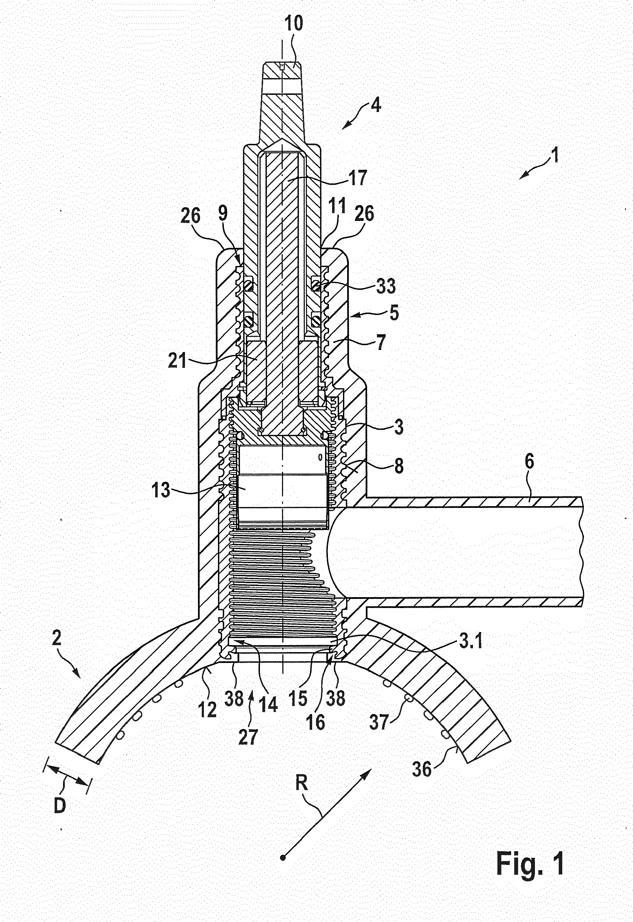

Die Figur 1 zeigt eine Querschnittsansicht einer Ausführungsform der erfindungsgemäßen Anbohrarmatur 1. Die Anbohrarmatur 1 besteht im Wesentlichen aus einer Anbohrkartusche 4, die über ihre gesamte Länge in ein Kunststoffformteil bestehend aus einem Sattelelement 2, einem Kartuschengehäuse 5 und einem Anschlussstutzen 6 eingegossen ist, wobei die Anbohrkartusche 4 über einen Großteil ihrer Länge von dem Kartuschengehäuse 5 eingefasst ist und lediglich über ein oberes Ende ihrer Antriebsspindel 10 über die Deckseite 26 des Kartuschengehäuses 5 aus dem Kunststoffformteil herausragt. Darüber hinaus erstreckt sich die Anbohrkartusche 4 mit einem unteren Ende 3.1 ihrer außen liegenden Hülse 3 in das Sattelelement hinein, so dass eine untere Stirnseite 12 der Hülse 3 einer Auflageseite 36 des Sattelelements 2 vorgelagert ist. In die Auflageseite 36 sind Heizwendel 37 eingelassen, um das Sattelelement 2 mit einem elektroschweißfähigen Kunststoffrohr zu verschweißen. Es ist erkennbar, dass das Sattelelement 2 in seiner Radialrichtung R eine Wandstärke D aufweist, wobei sich das untere Ende 3.1 der Hülse 3 um einen Anteil der Wandstärke D in das Sattelelement 2 hinein erstreckt, so dass eine besonders kompakte Bauform der Anbohrarmatur 1 erreicht wird.

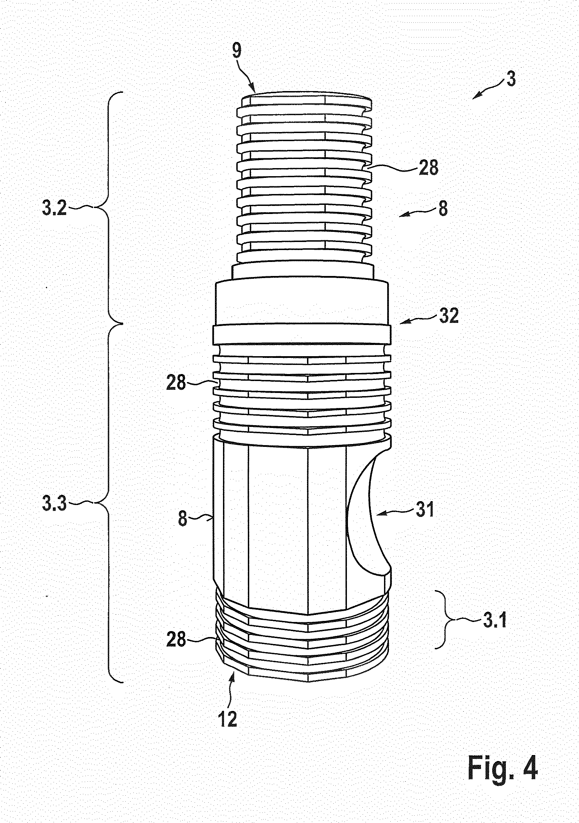

Die Figur 1 zeigt weiterhin, dass das Kartuschengehäuse 5 an seinem oberen Ende eine einteilig an die Seitenwand 7 angeformte Deckseite 26 aufwieist, welche eine obere Stirnseite 9 der Hülse 3 der Anbohrkartusche 4 umschließt. Die Anbohrkartusche 4 ist somit bis auf ihre Antriebsspindel 10, mit der sie über den Durchlass 11 in der Deckseite 26 aus dem Kartuschengehäuse 5 herausragt, vollständig von dem Kartuschengehäuse 5 umschlossen. Die Seitenwand 7 des Kartuschengehäuses 5, welche an die Deckseite 26 angeformt ist, bedeckt insbesondere vollständig eine Mantelfläche 8 der äußeren Hülse 3. Zur Herstellung einer kraftschlüssigen Verbindung zwischen dem Kartuschengehäuse 5 und der Anbohrkartusche 4 weist die Mantelfläche 8 eine Haltegeometrie 28 auf (siehe auch Figur 4), die von dem Kunststoffmaterial der Seitenwand 7 formschlüssig und vollständig überzogen ist.

Die Figur 1 lässt weiterhin erkennen, dass für die Abdichtung der Anbohrkartusche 4 nach außen lediglich Dichtringe 33 zwischen der Antriebsspindel 10 und der äußeren Hülse 3 erforderlich sind. Es ist insbesondere nicht mehr erforderlich, dass ein bei aus dem Stand der Technik bekannten Anbohrarmaturen vorgesehenes Deckelelement gegenüber der Antriebsspindel 10 und gegenüber dem Kartuschengehäuse 5 abgedichtet ist, so dass sich die gezeigte Anbohrarmatur insbesondere durch ihre einfache Bauart auszeichnet.

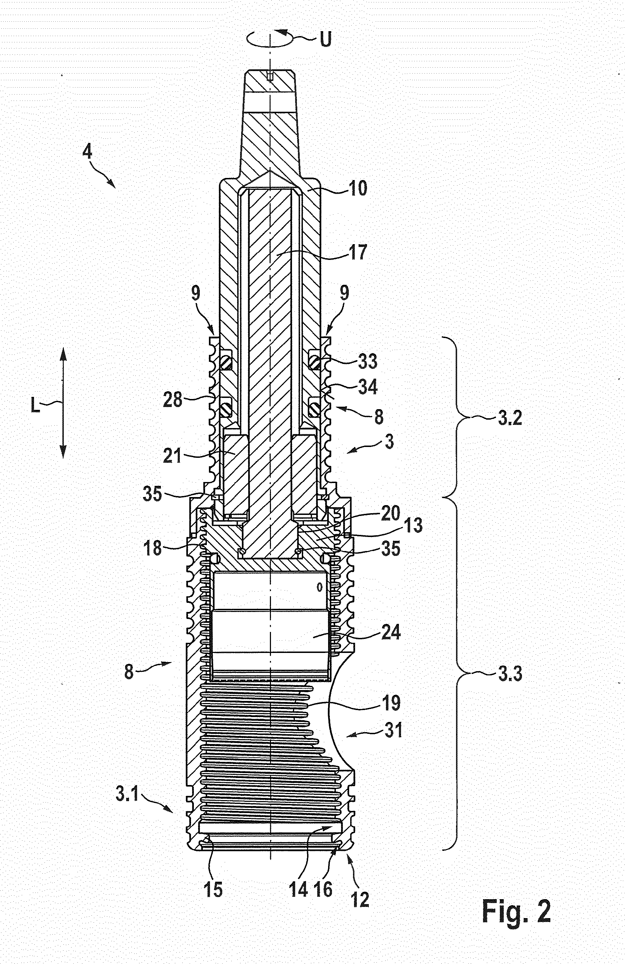

Weitere Einzelheiten in Bezug auf die Antriebskartusche 4 sind in Figur 2 dargestellt. Die Antriebskartusche 4 besteht im Wesentlichen aus einer äußeren Hülse 3, in der eine Antriebsspindel 10 verdrehbar in einem oberen Hülsenabschnitt 3.2 aufgenommen ist, wobei die Antriebsspindel 10 über Dichtringe 33 gegenüber einer Dicht- und Führungsfläche 34 am Innenumfang des oberen Hülsenabschnitts 3.1 abgedichtet ist.

Die Antriebsspindel 10 ist als Hohlspindel ausgeführt, wobei in dem sich in Längsrichtung L der Antriebsspindel 10 erstreckenden Hohlraum mit konstantem Querschnitt eine Bohrspindel 17 aufgenommen ist, die an ihrem unteren Ende aus der Antriebsspindel 10 herausragt und über eine erste Kupplung 20 mit einem Bohrkopf 13 drehgekoppelt ist. Die Bohrspindel 17 ist weiterhin über eine zweite Kupplung 21 mit der Antriebsspindel 10 drehgekoppelt. Die erste Kupplung kann einen Mehrkant aufweisen, der in einer entsprechenden Mehrkantaufnahme eingesetzt ist, während die zweite Kupplung 21 Zylinderstifte aufweist, die in korrespondierende Nuten im Außenumfang der Antriebsspindel 10 und im Innenumfang der Bohrspindel 17 eingreifen. Der Mehrkant kann über einen ersten Sprengring 35 in der Mehrkantaufnahme in dem Bohrkopf 13 gehalten werden. Ein weitere Sprengring 35 fixiert die Antriebsspindel 10 in Bezug auf den oberen Hülsenabschnitt 3.2 in Längsrichtung L.

Der Bohrkopf 13 weist ein Außengewinde 18 auf, das als ein Leichtlaufgewinde, beispielsweise als ein Rundgewinde, ausgebildet ist. Der Bohrkopf 13 greift über das Leichtlaufgewinde 18 in ein korrespondierendes Innengewinde in dem unteren Hülsenabschnitt 3.3 der Hülse 3 an dessen Innenumfang 14 ein. Eine Drehbewegung der Antriebsspindel 10 um ihre Längsachse L wird somit in eine translatorische Linearbewegung in Längsrichtung L der Anbohrkartusche 4 übersetzt. Der Bohrkopf 13 weist weiterhin eine Hülse 24 auf, deren freie Stirnfläche die Schneide des Bohrkopfes 13 bildet. Am Innenumfang der Hülse 24 sind hinterschnittige Haltekonturen eingebracht, um den beim Anbohren herausgetrennten Rohrausschnitt festzuhalten.

Der untere Hülsenabschnitt 3.3 weist weiterhin an seinem unteren Ende 3.1 am Innenumfang 14 einen Anschlag 15 auf, der eine untere Stellposition des Bohrkopfes 13 begrenzt. Zwischen einer unteren Stirnseite 12 des unteren Hülsenabschnitts 3.3 und dem Anschlag 15 ist ein Hinterschnitt 16 ausgebildet, welcher, wie in Figur 1 dargestellt ist, einteilig mit der unteren Stirnseite 12 von dem Kunststoffmaterial umspritzt werden kann, so dass bei der fertigen Anbohrarmatur 1 (siehe Figur 1) sämtliche außenliegenden Flächen der Hülse 3 von Kunststoffmaterial bedeckt sind. Die mit der Seitenwand 7 einteilige Umspritzung der unteren Stirnseite 12 bildet gerade die Bodenseite 38 des Kartuschengehäuses 5, so dass die umspritzte Kartusche 4 zwischen der Bodenseite 38 und der Deckseite 26 in ihrer Längsrichtung L (siehe Figur 2) festgelegt ist.

Die Figur 2 zeigt ergänzend zu Figur 1, dass die Mantelfläche 8 der Hülse 3 sowohl im oberen als auch im unteren Hülsenabschnitt 3.2, 3.3 eine Haltekontur 28 aufweist, welche von dem Kunststoffmaterial ausgefüllt werden kann und damit eine kraftschlüssige Verbindung zwischen der Anbohrkartusche 4 und dem Kunststoffformteil hergestellt wird. Der untere Hülsenabschnitt 3.3 weist einen Abgang 31 auf, der, wie in Figur 1 zu sehen ist, in den Anschlussstutzen 6 der Anbohrarmatur 1 mündet.

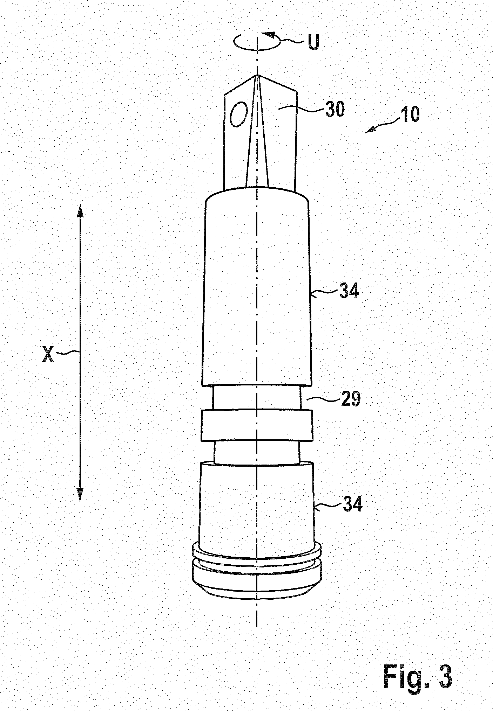

Die Figur 3 zeigt die Antriebsspindel 10 gemäß den Figuren 1 und 2. Diese weist an ihrem oberen Ende einen Mehrkantadapter 30 für den Anschluss eines manuellen oder motorischen Antriebs, beispielsweise eines Drehmomentschlüssels, auf. An den Mehrkantadapter 30 schließt sich in Axialrichtung X der Antriebsspindel 10 unmittelbar eine zylinderförmige Dicht- und Führungsfläche 34 an, mit welcher die Antriebsspindel 10 an einer korrespondierenden Dicht- und Führungsfläche am Innenumfang des oberen Hülsenabschnitts 3.2 anliegt (vgl. Figur 2). Im Verlauf der Dicht- und Führungsfläche 34 weist diese zwei umlaufende Dichtungsnuten 29 auf, in die ein Dichtelement 33, beispielsweise ein O-Ring, eingesetzt werden kann.

Die Figur 4 zeigt eine Ausführungsform der Hülse 3 mit einem oberen Hülsenabschnitt 3.2 und einem unteren Hülsenabschnitt 3.3. Entsprechend dem in Figur 2 gezeigten Aufbau weist der obere Hülsenabschnitt 3.2 über einen wesentlichen Teil seiner Länge einen geringeren Durchmesser als der untere Hülsenabschnitt 3.3 auf. Die beiden Hülsenabschnitte 3.2, 3.3 sind über eine Schraubverbindung 32 miteinander verbunden. An dem Außenumfang von sowohl oberem als auch unterem Hülsenabschnitt 3.2, 3.3 ist eine Haltekontur in Form von Nuten und einer Mehrkantgeometrie eingearbeitet, um, wie bereits zuvor ausgeführt, die Hülse 3 in Bezug auf das Kunststoffformteil festzulegen. Der untere Hülsenabschnitt 3.3 weist an seinem an die untere Stirnfläche 12 angrenzenden unteren Ende 3.1 eine weitere Haltekontur 28 auf. Das Hülsenelement 3 kann über das untere Ende 3.1 in das Sattelelement 2 hineinragen, wie dies mit Bezug auf Figur 1 beschrieben ist.

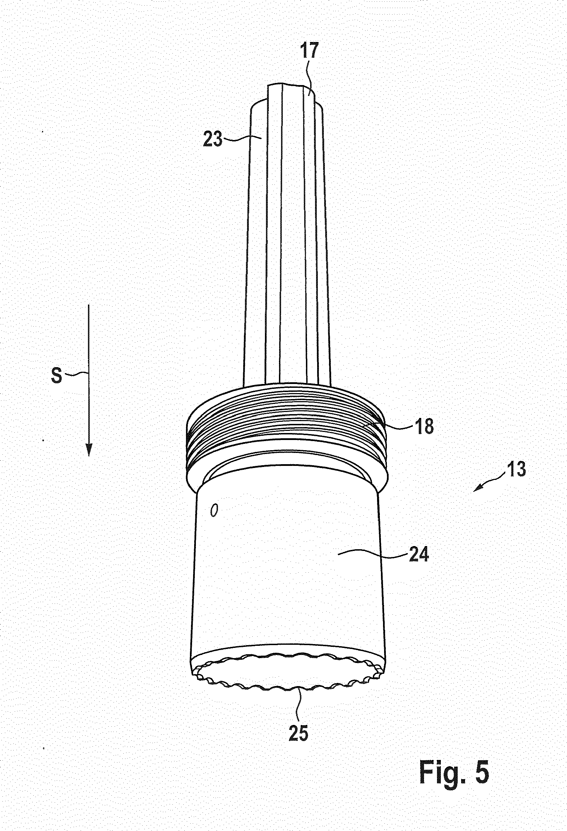

In Figur 5 ist beispielhaft ein Bohrkopf 13 gezeigt, der mit einer Bohrspindel 17 verbunden ist. Die Bohrspindel 17 weist neben den für die Bildung der zweiten Kupplung erforderlichen Längsnuten Spülnuten 23 auf, welche es ermöglichen, dass der Hohlraum, welcher sich im Inneren der Antriebsspindel 10 ausbildet, wenn die Bohrspindel teilweise oder vollständig ausgefahren ist, von dem durch die Anbohrarmatur geführten Medium umspült ist, so dass damit Hygieneanforderungen erfüllt werden können. Der Bohrkopf 13 weist an seinem unteren Ende eine Schneidhülse 24 auf, die in ein Koppelstück, über das der Bohrkopf 13 mit der Bohrspindel 17 verbunden ist, übergeht und dass an seinem Außenumfang ein Leichtlaufgewinde 18 in Form eines Rundgewindes aufweist. An dem freien Ende der Schneidhülse 24 weist dieser eine Schneidkante 25 auf, die ein Wellenprofil besitzt und damit ein möglichst effizientes Anbohren von Kunststoffrohren unter Aufwendung vergleichsweise geringer Anbohrdrehmomente ermöglicht.

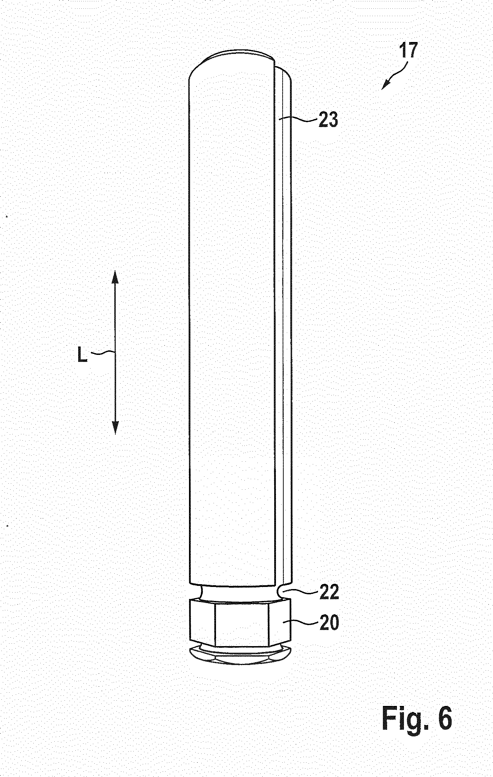

In Figur 6 ist die Bohrspindel 17 im Detail gezeigt. An ihrem in Längsrichtung L unteren Ende weist diese eine als Mehrkant, hier Sechskant, ausgebildete erste Kupplung 20 auf, über die die Bohrspindel 17 in eine entsprechende Mehrkantaufnahme in dem Bohrkopf 13 verdrehsicher eingesetzt ist. An dem unteren Ende der ersten Kupplung 20 ist eine Nut ausgebildet, in die ein Sprengring eingesetzt werden kann, um die Bohrspindel 17 an dem Bohrkopf 13 in Längsrichtung L festzulegen. Des Weiteren weist die Bohrspindel 17 angrenzend an das obere Ende der ersten Kupplung 20 eine Abreißstelle 22 in Form einer umlaufenden Nut auf. Das Abreißmoment der Abreißstelle 22 ist gerade derart auf die Geometrie der Anbohrarmatur abgestimmt, dass sie bei Überschreiten eines über die Antriebsspindel 10 eingebrachten Maximaldrehmoments die Kopplung zwischen der Bohrspindel 17 und der ersten Kupplung 20 unterbricht, so dass eine Zerstörung der Anbohrarmatur vermieden wird.

### Bezugszeichenliste

- 1: Anbohrarmatur
- 2: Sattelelement
- 3: äußere Hülse
- 3.1: unteres Ende
- 3.2: oberer Hülsenabschnitt
- 3.3: untere Hülsenabschnitt
- 4: Anbohrkartusche
- 5: Kartuschengehäuse
- 6: Anschlussstutzen
- 7: Seitenwand
- 8: Mantelfläche
- 9: obere Stirnseite
- 10: Antriebsspindel
- 11: Durchlass
- 12: untere Stirnseite
- 13: Bohrkopf
- 14: Innenumfang
- 15: Anschlag
- 16: Hinterschnitt
- 17: Bohrspindel
- 18: Leichtlaufgewinde
- 19: Gewinde
- 20: erste Kupplung
- 21: zweite Kupplung
- 22: Abreißstelle
- 23: Spülnut
- 24: Hülse
- 25: Schneidkante
- 26: Deckseite
- 27: Durchlass
- 28: Haltekontur
- 29: Dichtungsnut
- 30: Mehrkantadapter
- 31: Abgang
- 32: Schraubverbindung
- 33: Dichtring
- 34: Dicht- und Führungsfläche
- 35: Sprengring
- 36: Auflageseite
- 37: Heizwendel
- 38: Bodenseite
- D: Wandstärke
- L: Längsrichtung
- R: Radialrichtung
- S: Vorschubrichtung
- U: Drehrichtung
- X: Axialrichtung

## Patentansprüche

1. Anbohrarmatur (1) für die Montage auf einem Kunststoffrohr, wobei die Anbohrarmatur ein Sattelelement (2), ein eine äußere Hülse (3) einer Anbohrkartusche (4) umschließendes Kartuschengehäuse (5) und einen von dem Kartuschengehäuse (5) abgehenden Anschlussstutzen (6) aufweist, wobei das Sattelelement (2), das Kartuschengehäuse (5) und der Anschlussstutzen (6) aus demselben elektroschweißfähigen Kunststoffmaterial als ein einteiliges Kunststoffformteil ausgebildet sind, und wobei das Kartuschengehäuse (5) und die Anbohrkartusche (4) einteilig ausgebildet sind, wozu das Kartuschengehäuse eine Umspritzung der Anbohrkartusche (4) aus dem Kunststoffmaterial ist, mit einer Seitenwand (7), die eine äußere Mantelfläche (8) der Hülse (3) umschließt, einer einteilig an die Seitenwand (7) angeformten Deckseite (26), die eine obere Stirnseite (9) der Hülse (3), über die eine Antriebsspindel (10) der Anbohrkartusche (4) aus dem Kartuschengehäuse (5) herausragt, umschließt, und mit einer einteilig an die Seitenwand (7) angeformten Bodenseite (38), die eine untere Stirnseite (12) der Hülse (3), über die ein Bohrkopf (13) aus der Hülse (3) heraus verlagert werden kann, umschließt, **dadurch gekennzeichnet, dass** das einteilige Kunststoffformteil aus Sattelelement (2), Kartuschengehäuse (5) und Anschlussstutzen (6), das insbesondere ein Spritzgussformteil sein kann, alle außen liegenden Seiten der Hülse (3) vollständig und einteilig umgibt, insbesondere zumindest die Mantelfläche (8), die obere Stirnseite (9) und eine untere Stirnseite (12) der Hülse (3).

2. Anbohrarmatur (1) nach Anspruch 1, bei der das Kartuschengehäuse (5) in der Deckseite (26) einen Durchlass (11) aufweist, über den die Antriebsspindel (10) aus dem Kartuschengehäuse (5) herausragt, wobei der Durchlass (11) einen Durchmesser aufweist, der im Wesentlichen einem Innendurchmesser der Hülse (3) an der oberen Stirnseite (9) entspricht.

3. Anbohrarmatur (1) nach einem der vorangegangenen Ansprüche, bei der das Sattelelement (2) in Radialrichtung (R) eine Wandstärke (D) aufweist, wobei sich die Hülse (3) mit ihrer unteren Stirnseite (12) zu mehr als 50% und vorzugsweise zu mehr als 75% der Wandstärke (D) in der Radialrichtung (R) in das Sattelelement (2) hinein erstreckt, wobei die verbleibende Wandstärke zwischen unterer Stirnseite (12) und einer Auflageseite (36) des Sattelelements (2) die Bodenseite (38) bildet, so dass die Bodenseite (38) als ein umlaufender Ringflansch ausgebildet ist.

4. Anbohrarmatur (1) nach Anspruch 3, bei der die Hülse (3) an ihrem sich in das Sattelelement (2) hineinragenden Ende (3.1) an ihrem Innenumfang (14) der unteren Stirnseite (12) vorgelagert einen Anschlag (15) für einen in Längsrichtung (L) der Hülse (3) verstellbaren Bohrkopf (13) aufweist, wobei die Hülse (3) an ihrem Innenumfang in Längsrichtung (L) zwischen dem Anschlag (15) und der unteren Stirnseite (12) einen von dem Kunststoffmaterial des einteiligen Kunststoffformteils gefüllten, insbesondere umspritzten Hinterschnitt (16) aufweist.

5. Anbohrarmatur (1) nach einem der vorangegangenen Ansprüche, bei der die Antriebsspindel (10) als Hohlspindel ausgeführt ist, in der eine Bohrspindel (17) in Axialrichtung (X) der Antriebsspindel (10) verstellbar und in Drehrichtung (U) mit der Hohlspindel drehgekoppelt ist, wobei die Bohrspindel (17) mit einem Bohrkopf (13) drehgekoppelt ist, und wobei der Bohrkopf (13) an seinem Außenumfang ein Leichtlaufgewinde (18), insbesondere ein Rundgewinde aufweist, über das der Bohrkopf (13) in ein komplementäres Gewinde (19) am Innenumfang der Hülse (3) eingreift.

6. Anbohrarmatur (1) nach Anspruch 5, bei der die Bohrspindel (17) zwischen einer ersten Kupplung (20), über die der Bohrkopf (13) mit der Bohrspindel (17) drehgekoppelt ist, und einer zweiten Kupplung (21), über die die Bohrspindel (17) mit der Antriebsspindel (10) drehgekoppelt ist, eine Abreißstelle (22) aufweist, welche die Drehkopplung zwischen dem Bohrkopf (13) und der Antriebsspindel (10) unterbricht, wenn das über die Antriebsspindel (10) auf den Bohrkopf (13) ausgeübte Drehmoment einen vorgegebenen Maximalwert übersteigt.

7. Anbohrarmatur (1) nach Anspruch 6, bei der die Abreißstelle (22) eine Materialverjüngung der Bohrspindel (17) aufweist und vorzugsweise als umlaufende oder unterbrochene Nut im Außenumfang der Bohrspindel (17) ausgebildet ist.

8. Anbohrarmatur (1) nach einem der Ansprüche 5 bis 7, bei der die Bohrspindel (17) mindestens eine sich entlang ihrer Längsrichtung (L) erstreckende Spülnut (23) aufweist, über die in einem teil- oder im vollausgefahrenen Stellzustand der Bohrspindel (17) ein Aufnahmeraum der Antriebsspindel, in den die Bohrspindel (17) formschlüssig eingesetzt ist, mit dem Anschlussstutzen (6) fluidisch in Verbindung steht.

9. Anbohrarmatur (1) nach einem der vorangegangenen Ansprüche, bei der der Bohrkopf (13) eine Hülse (24) mit einer als Schneidkante (25) ausgebildeten Stirnseite mit einem Wellenprofil aufweist, das sich entlang der Schneidkante (25) erstreckt und eine Periodizität von 1 mm bis 20 mm, vorzugsweise von 2 mm bis 10 mm und besonders bevorzugt von 3 mm bis 6 mm aufweist, wobei eine Amplitude der Schneidkante (25) in einer Vorschubrichtung (S) des Bohrkopfs (13) 0,2 mm bis 1 mm und bevorzugt 0,3 mm bis 0,8 mm beträgt.

10. Herstellungsverfahren für eine Anbohrarmatur (1), das die Schritte aufweist:
- Einsetzen einer Anbohrkartusche (4) in eine Spritzgussform einer Spritzgussmaschine, Ausrichten der Anbohrkartusche (4) in Bezug auf die Spritzgussform und Schließen der Spritzgussform, wobei die Spritzgussform für die einteilige Ausbildung eines Sattelelements (2), eines Kartuschengehäuses (5) und eines von dem Kartuschengehäuse (5) abgehenden Anschlussstutzens (6) eingerichtet ist;
- Einleiten vorplastifizierten und elektroschweißfähigen Kunststoffmaterials in die Spritzgussform und Umspritzen der Anbohrkartusche (4) zur Ausbildung des Kartuschengehäuses (5);
**dadurch gekennzeichnet, dass** bei dem Umspritzen der Anbohrkartusche (4) eine äußere Mantelfläche (8) einer äußeren Hülse (3) der Anbohrkartusche (4) zur Ausbildung einer Seitenwand (7) des Kartuschengehäuses (5), eine obere Stirnseite (9) der Hülse (3) zur Ausbildung einer einteilig an die Seitenwand (7) angeformten Deckseite (26) und eine untere Stirnseite (12) der Hülse (3) zur Ausbildung einer einteilig an die Seitenwand (7) angeformten Bodenseite (38) vollständig umspritzt werden.

11. Verfahren nach Anspruch 10, bei dem die Anbohrkartusche (4) als bereits vollständig montiertes Bauteil in die Spritzgussform eingesetzt und umspritzt wird.

12. Verfahren nach Anspruch 10 oder 11, bei dem alle ausliegenden Seiten der Hülse (3) einteilig und vollständig umspritzt werden, wobei ein erster Durchlass (11), über den eine Antriebsspindel (10) aus dem Kartuschengehäuse (5) herausragt, und ein zweiter Durchlass (27), über den ein Bohrkopf (13) zum Anbohren eines Rohres aus der Hülse (3) heraus verlagert werden kann, ausgebildet werden.

## Claims

1. A drill fitting (1) for mounting on a plastic pipe, wherein the drill fitting comprises a saddle element (2), a capsule housing (5) encompassing an outer shell (3) of a drilling capsule (4), and a branch stub (6) protruding outward from the capsule housing (5), wherein the saddle element (2), the capsule housing (5), and the branch stub (6) are formed as an integral molded plastic component made of the same electrofusible plastic material, and wherein the capsule housing (5) and the drilling capsule (4) are formed as an integral component, for which purpose the capsule housing is overmolded onto the drilling capsule (4), the two being made of the same plastic material, said capsule housing having a lateral wall (7) which encompasses an outer lateral surface (8) of the shell (3), a top surface (26) which is molded integrally onto the lateral wall (7) and encompasses the upper end face (9) of the shell (3), and via which a drive spindle (10) of the drilling capsule (4) protrudes outward from the capsule housing (5), and a bottom surface (38) which is molded integrally onto the lateral wall (7) and encompasses the lower end face (12) of the shell (3), and via which a drill head (13) can be moved outward out of the shell (3), **characterized in that** the integrally formed molded plastic component composed of saddle element (2), capsule housing (5), and branch stub (6), which component may, in particular, be an injection molded component, fully and integrally encompasses all the outer surfaces of the shell (3), in particular at least the outer lateral surface (8), the upper end face (9) and a lower end face (12) of the shell (3).

2. The drill fitting (1) according to Claim 1, in which the capsule housing (5) has in its top surface (26) a passage (11) via which the drive spindle (10) protrudes outward from the capsule housing (5), wherein the diameter of the passage (11) is substantially equal to the inner diameter of the shell (3) at the upper end face (9) thereof.

3. The drill fitting (1) according to any one of the preceding claims, in which the saddle element (2) has a wall thickness (D) in the radial direction (R), wherein the lower end face (12) of the shell (3) extends into the saddle element (2) by more than 50% and preferably by more than 75% of the wall thickness (D) in the radial direction (R), wherein the remaining wall thickness between the lower end face (12) and the bearing surface (36) of the saddle element (2) forms the bottom surface (38), so that the bottom surface (38) is configured as a continuous ring flange.

4. The drill fitting (1) according to Claim 3, in which the shell (3) has a stop (15) for a drill head (13), which is displaceable in the longitudinal direction (L) of the shell (3), said stop being positioned on the inner periphery (14) of the shell at the end (3.1) of the shell that protrudes into the saddle element (2), upstream of the lower end face (12), wherein the shell (3) also has an undercut (16) on its inner periphery, between the stop (15) and the lower end face (12) in the longitudinal direction (L), which undercut is filled with the plastic material of the integrally formed, molded plastic component, in particular said material being overmolded onto said undercut.

5. The drill fitting (1) according to any one of the preceding claims, in which the drive spindle (10) is embodied as a hollow spindle in which a drill spindle (17) can be displaced in the axial direction (X) of the drive spindle (10) and is coupled rotatably in the direction of rotation (U) to the hollow spindle, wherein the drill spindle (17) is coupled rotatably to a drill head (13), and wherein the drill head (13) has on its outer periphery a smooth-running thread (18), in particular a round thread, via which the drill head (13) engages into a complementary thread (19) on the inner periphery of the shell (3).

6. The drill fitting (1) according to Claim 5, in which the drill spindle (17) has a breakaway point (22) between a first coupling (20), via which the drill head (13) is coupled rotatably to the drill spindle (17), and a second coupling (21), via which the drill spindle (17) is coupled rotatably to the drive spindle (10), which breakaway point breaks the rotatable coupling between the drill head (13) and the drive spindle (10) when the torque exerted on the drill head (13) via the drive spindle (10) exceeds a predefined maximum level.

7. The drill fitting (1) according to Claim 6, in which the breakaway point (22) includes a tapering of the material of the drill spindle (17) and is preferably configured as a constant or interrupted groove on the outer periphery of the drill spindle (17).

8. The drill fitting (1) according to any one of Claims 5 to 7, in which the drill spindle (17) has at least one flushing groove (23), extending in the longitudinal direction (L) of said drill spindle, via which a receiving space of the drive spindle into which the drill spindle (17) is form-fittingly inserted is fluidically connected to the branch stub (6) when the drill spindle (17) is in a partially or fully extended position.

9. The drill fitting (1) according to any one of the preceding claims, in which the drill head (13) has a shell (24) with an end face configured as a cutting edge (25), which has a corrugated profile that extends along the cutting edge (25) and has a periodicity of 1 mm to 20 mm, preferably of 2 mm to 10 mm, and particularly preferably of 3 mm to 6 mm, wherein the amplitude of the cutting edge (25) in the direction of advancement (S) of the drill head (13) measures 0.2 mm to 1 mm, and preferably 0.3 mm to 0.8 mm.

10. A method for producing a drill fitting (1), comprising the following steps:
- placing a drilling capsule (4) in an injection mold of an injection molding machine, aligning the drilling capsule (4) with respect to the injection mold, and closing the injection mold, wherein the injection mold is configured for the integral formation of a saddle element (2), a capsule housing (5), and a branch stub (6) protruding outward from the capsule housing (5);
- introducing preplasticized and electrofusible plastic material into the injection mold and overmolding the drilling capsule (4) with said material to form the capsule housing (5);
**characterized in that** in the overmolding of the drilling capsule (4), the outer lateral surface (8) of the outer shell (3) of the drilling capsule (4) is fully overmolded to form a lateral wall (7) of the capsule housing (5), the upper end face (9) of the shell (3) is fully overmolded to form a top surface (26) which is molded integrally onto the lateral wall (7), and the lower end face (12) of the shell (3) is fully overmolded to form a bottom surface (38) which is molded integrally onto the lateral wall (7).

11. The method according to Claim 10, in which the drilling capsule (4) placed in the injection mold and overmolded is in the form of a fully assembled component.

12. The method according to Claim 10 or 11, in which all the outer surfaces of the shell (3) are integrally and fully overmolded, wherein a first passage (11) via which a drive spindle (10) protrudes out of the capsule housing (5) and a second passage (27) via which a drill head (13) for drilling a pipe can be advanced out of the shell (3) are formed.

## Revendications

1. Appareil de perçage (1) destiné à être monté sur un tube en matière plastique, l'appareil de perçage comprenant un élément de selle (2), un boîtier de cartouche (5) entourant un manchon externe (3) d'une cartouche de perçage (4) et un embout de raccordement (6) sortant du boîtier de cartouche (5), l'élément de selle (2), le boîtier de cartouche (5) et l'embout de raccordement (6) étant constitués de la même matière plastique électro-soudable qu'une pièce en matière plastique moulée d'une seule pièce et le boîtier de cartouche (5) et la cartouche de perçage (4) étant réalisés d'une seule pièce, le boîtier de cartouche étant pour cela un surmoulage de la cartouche de perçage (4) en matière plastique, avec une paroi latérale (7), qui entoure une surface d'enveloppe externe (8) du manchon (3), un côté de recouvrement (26) moulé d'une seule pièce sur la paroi latérale (7), qui entoure une face frontale supérieure (9) du manchon (3), par laquelle dépasse une broche d'entraînement (10) de la cartouche de perçage (4) hors du boîtier de cartouche (5) et avec un côté de fond (38) moulé d'une seule pièce sur la paroi latérale (7), qui entoure une face frontale inférieure (12) du manchon (3), par laquelle une tête de perçage (13) peut être déplacée hors du manchon (3), **caractérisé en ce que** la pièce en matière plastique moulée d'une seule pièce, constituée d'un élément de selle (2), d'un boîtier de cartouche (5) et d'un embout de raccordement (6), qui peut plus particulièrement être une pièce moulée par injection, entoure tous les côtés externes du manchon (3) entièrement et d'une seule pièce, plus particulièrement au moins la surface d'enveloppe (8), la face frontale supérieure (9) et une face frontale inférieure (12) du manchon (3).

2. Appareil de perçage (1) selon la revendication 1, dans lequel le boîtier de cartouche (5) comprend dans le côté de recouvrement (26) un passage (11) par lequel la broche d'entraînement (10) dépasse hors du boîtier de cartouche (5), le passage (11) présentant un diamètre qui correspond globalement à un diamètre intérieur du manchon (3) au niveau de la face frontale supérieure (9).

3. Appareil de perçage (1) selon l'une des revendications précédentes, dans lequel l'élément de selle (2) présente, dans la direction radiale (R), une épaisseur de paroi (D), le manchon (3) s'étendant, avec sa face frontale inférieure (12), de plus de 50 % et de préférence de plus de 75 % de l'épaisseur de paroi (D) dans la direction radiale (R) dans l'élément de selle (2), l'épaisseur de paroi restante, entre la face frontale inférieure (12) et une face d'appui (36) de l'élément de selle (2), formant le côté de fond (38), de façon à ce que le côté de fond (38) soit conçu comme une bride annulaire circulaire.

4. Appareil de perçage (1) selon la revendication 3, dans lequel le manchon (3) comprend, au niveau de son extrémité (3.1) dépassant dans l'élément de selle (2), sur sa circonférence intérieure (14), en amont de la face frontale inférieure (12), une butée (15) pour une tête de perçage (13) mobile dans la direction longitudinale (L) du manchon (3), le manchon (3) comprenant, au niveau de sa circonférence intérieure, dans la direction longitudinale (L), entre la butée (15) et la face frontale inférieure (12) une contre-dépouille (16) remplie, plus particulièrement surmoulée, avec la matière plastique de la pièce en matière plastique moulée d'une seule pièce.

5. Appareil de perçage (1) selon l'une des revendications précédentes, dans lequel la broche d'entraînement (10) est conçue comme une broche creuse, dans laquelle une broche de perçage (17) est mobile dans la direction axiale (X) de la broche d'entraînement (10) t qui est couplée en rotation dans le sens de rotation (U) avec la broche creuse, la broche de perçage (17) étant couplée en rotation avec une tête de perçage (13) et la tête de perçage (13) comprenant, sur sa circonférence extérieure, un filetage à faible frottement (18), plus particulièrement un filetage rond, par l'intermédiaire duquel la tête de perçage (13) s'emboîte dans un filetage complémentaire (19) sur la circonférence intérieure du manchon (3).

6. Appareil de perçage (1) selon la revendication 5, dans lequel la broche de perçage (17) comprend, entre un premier couplage (20), par l'intermédiaire duquel la tête de perçage (13) est couplée en rotation avec la broche de perçage (17), et un deuxième couplage (21), par l'intermédiaire duquel la broche de perçage (17) est couplée en rotation avec la broche d'entraînement (10), un point de rupture (22) qui interrompt le couplage en rotation entre la tête de perçage (13) et la broche d'entraînement (10) lorsque le couple exercé par l'intermédiaire de la broche d'entraînement (10) sur la tête de perçage (13) dépasse une valeur maximale prédéterminée.

7. Appareil de perçage (1) selon la revendication 6, dans lequel le point de rupture (22) comprend un rétrécissement de matériau de la broche de perçage (17) et de préférence est conçu comme une rainure circulaire ou interrompue dans la circonférence extérieure de la broche de perçage (17).

8. Appareil de perçage (1) selon l'une des revendications 5 à 7, dans lequel la broche de perçage (17) comprend au moins une rainure de rinçage (23) s'étendant le long de sa direction longitudinale (L), par l'intermédiaire de laquelle, dans un état de réglage partiellement ou entièrement sorti de la broche de perçage (17), un espace de logement de la broche d'entraînement, dans lequel est inséré la broche de perçage (17), est en relation fluidique avec l'embout de raccordement (6).

9. Appareil de perçage (1) selon l'une des revendications précédentes, dans lequel la tête de perçage (13) comprend un manchon (24) avec une face frontale, conçue comme une arête de coupe (25), avec un profil ondulé, qui s'étend le long de l'arête de coupe (25), et présente une périodicité de 1 mm à 20 mm, de préférence de 2 mm à 10 mm et de préférence de 3 mm à 6 mm, une amplitude de l'arête de coupe (25) dans une direction d'avance (S) de la tête de perçage (13) étant de 0,2 mm à 1 mm et de préférence de 0,3 mm à 0,8 mm.

10. Procédé de fabrication pour un appareil de perçage (1) qui comprend les étapes suivantes :
- insertion d'une cartouche de perçage (4) dans un moule à injection d'une machine de moulage par injection, orientation de la cartouche de perçage (4) par rapport au moule à injection et fermeture du moule à injection, le moule à injection étant conçu pour la formation d'une seule pièce d'un élément de selle (2), d'un boîtier de cartouche (5) et d'un embout de raccordement (6) sortant du boîtier de cartouche (5) ;
- introduction d'une matière plastique pré-plastifiée et électro-soudable dans le moule à injection et surmoulage de la cartouche de perçage (4) pour la formation du boîtier de cartouche (5) ;
**caractérisé en ce que**, lors du surmoulage de la cartouche de perçage (4), une surface d'enveloppe externe (8) d'un manchon externe (3) de la cartouche de perçage (4) étant entièrement surmoulée pour la formation d'une paroi latérale (7) du boîtier de cartouche (5), une face frontale supérieure (9) du manchon (3) étant entièrement surmoulée pour la formation d'un côté de recouvrement (26) moulé d'une seule pièce sur la paroi latérale (7) et une face frontale inférieure (12) du manchon (3) étant entièrement surmoulée pour la formation d'un côté de fond (38) moulé d'une seule pièce sur la paroi latérale (7).

11. Procédé selon la revendication 10, dans lequel la cartouche de perçage (4) est insérée en tant que pièce déjà entièrement montée dans le moule à injection et surmoulée.

12. Procédé selon la revendication 10 ou 11, dans lequel tous les côtés externes du manchon (3) sont surmoulés d'une seule pièce et entièrement, une premier passage (11), par lequel une broche d'entraînement (10) dépasse hors du boîtier de cartouche (5) et un deuxième passage (27), par lequel une tête de perçage (13), pour le perçage d'un tube, peut être déplacé hors du manchon (3), étant formés.
